# DEMANDE DE BREVET EUROPEEN

(11) **EP 2 586 398 A1**
(43) Date de publication de la demande: **01.05.2013**
(21) Numéro de dépôt: 11290519.5
(22) Date de dépôt: 25.10.2011
(51) Int. Cl.: A61C 8/00

(54) **Implant dentaire**

(71) Demandeur: Sudimplant, 31500 Toulouse (FR)
(72) Inventeur: Olivier Benhamou, 1060 Bruxelles (BE)
(74) Mandataire: Quintelier, Claude

(57) **Abrégé**

Implant dentaire ayant une géométrie interne et une géométrie externe, la géométrie externe comprenant au moins trois sections. Cet implant dentaire est pourvu d'un moyen de fixation réalisé par une fixation de type cône morse pour y fixer un pilier prothétique et comprend une section cervicale de forme ovoïde ou une bague en céramique

## Description

### Domaine de l'invention

La présente invention se rapporte à un implant dentaire ayant une géométrie interne et une géométrie externe, laquelle géométrie externe comprend au moins trois sections dont une forme la section cervicale, ledit implant étant pourvu d'un moyen de fixation agencé pour y fixer un pilier prothétique.

### Etat de la technique

Généralement, de tels implants sont utilisés en dentisterie. Un implant dentaire est une racine artificielle qui a pour rôle de remplacer une racine de dent naturelle. Sa mise en place chirurgicale consiste à réaliser, par forage dans l'os des maxillaires, une alvéole (puits de forage) dans laquelle sera vissé ou impacté l'implant dentaire. Suite au placement de l'implant dentaire et après un temps de cicatrisation, un composant prothétique y sera fixé et supportera une couronne ou un appareil dentaire.

Depuis de nombreuses années, les bioformes et les états de surfaces des implants dentaires ont évolué pour aboutir à une meilleure biocompatibilité et ostéointégration. Initialement, les implants dentaires étaient en titane, sans aucun traitement de surface, et devaient être impactés dans l'os des maxillaires. Pour être moins traumatiques pour l'os, les implants dentaires ont été ensuite pourvus de spires afin de ne plus les impacter mais bien de les visser dans l'os des maxillaires. De plus les surfaces en titane des implants ont progressivement été modifiées, par différents traitements physico-chimiques, afin d'optimiser leur ostéointégration.

Les implants dentaires ont par la suite présenté des formes essentiellement cylindriques pour combler l'espace laissé vacant par la perte d'une dent mais aussi pour avoir une plus grande surface de contact avec l'os. Plus récemment, des études ont révélé qu'une forme anatomique se rapprochant de celle des racines des dents naturelles devait être préférée, et c'est ainsi que des implants coniques ont été développés. Cependant, les cliniciens se sont aperçus que l'os crestal, situé au sommet de l'os des maxillaires et en contact avec la gencive, se résorbait parfois, entraînant des problèmes parodontaux dont la gestion reste délicate (cratérisation). C'est pourquoi des micro-spires situées exclusivement dans la partie cervicale des implants dentaires ont été développées, favorisant ainsi la préservation de l'os crestal.

Les éléments prothétiques peuvent être fixés à l'implant de multiples façons : vissé, transvissé, ce qui signifie que l'élément prothétique est percé en son centre afin d'y recevoir une vis, ou par friction, en particulier une fixation de type cône morse. Aujourd'hui, le système de fixation de type cône morse a fait ses preuves et offre l'avantage d'assurer une fixation prothétique durable sur l'implant et une meilleure étanchéité entre l'implant et la gencive.

Le choix du système de fixation va conditionner la bioforme de l'implant puisque le système de fixation va avoir un certain encombrement au niveau de l'implant, en particulier avec le système de fixation de type cône morse. Malgré ce système de fixation encombrant, il convient de laisser suffisamment d'épaisseur de matériau (titane, céramique, polymère, ...) afin de ne pas affaiblir la résistance mécanique des implants qui doivent être en contact étroit avec l'os environnant. Ceci a des répercussions sur la bioforme de l'implant, en particulier dans sa partie cervicale où un diamètre minimum est à respecter.

Actuellement, il existe différents types d'implants dentaires avec différents profils, comme par exemple des implants en forme de lame ou de disque, implants aiguilles, implants juxta-osseux, implants cylindriques ou cylindro-coniques, etc. Cependant, ces implants dentaires posent des problèmes à cause de leurs formes et de leurs géométries. En effet, la plupart des implants dentaires actuels ne respectent pas suffisamment les tissus biologiques, ce qui peut causer des infections, engager un processus de rejet, voire de fonte osseuse, procurer des sensations désagréables et/ou la non-intégration de l'implant dans l'os.

### Bref résumé de l'invention

La présente invention a pour but de réaliser un implant dentaire qui respecte mieux les tissus biologiques en permettant une meilleure intégration de l'implant, en particulier dans la région crestale sans désorganiser les cellules osseuses.

Un implant dentaire suivant la présente invention est caractérisé en ce que la géométrie externe de l'implant dentaire comprend une section cervicale de forme ovoïde dans le sens longitudinal et un moyen de fixation réalisé par une fixation de type cône morse pour la fixation du pilier prothétique. Un implant dentaire de forme ovoïdo-cylindro-conique combiné à un moyen de fixation de type cône morse permet un ancrage primaire optimale dans l'os, un maximum de surface de contact avec l'os environnant, une meilleure absorption de la compression osseuse par sa section ovoïde (libération des contraintes liées à l'insertion de l'implant dans l'os), sans désorganiser les cellules osseuses et en respectant les tissus biologiques. Cette forme ovoïde de l'implant, associée à la forme d'émergence du pilier donnée par le cône morse, ménagera un espace biologique sain autour de l'implant.

Une forme de réalisation particulière de la présente invention concerne un implant dentaire monobloc en titane ou en zircone-titane, ayant une géométrie interne comprenant au moins trois sections afin d'assurer une bonne ergonomie ainsi qu'une bonne sécurité prothétique et une géométrie externe comprenant au moins trois sections afin d'assurer un bon ancrage dans l'os des maxillaires.

La géométrie externe comprend une section cervicale de forme ovoïde ayant un diamètre qui se réduit vers la tête de l'implant dentaire. Cette section cervicale peut être surmontée d'une partie biseautée ou par une bague en céramique cerclant un cylindre en titane qui fait partie du corps de l'implant et qui est lié à la section cervicale de l'implant par une section intermédiaire dite collerette. La partie biseautée permet de rejoindre, de façon atraumatique pour l'os crestal, l'émergence du pilier prothétique. La bague en céramique assure à la fois une parfaite étanchéité de l'implant permettant d'éviter toute infiltration bactérienne au niveau de l'os crestal, et une meilleure cicatrisation des tissus mous environnant.

Sous cette section cervicale de forme ovoïde, se succèdent, dans une direction descendante, de préférence une section de forme cylindrique, une section de forme conique et une section en forme de pointe. La section en forme de pointe ainsi que la section de forme conique comportent une spirale conique à leur surface permettant à l'implant dentaire d'être auto-taraudant et ainsi de mordre dans l'os environnant pour assurer la fixation de l'implant dentaire. La spirale conique auto-taraudante facilite le vissage de l'implant dentaire dans l'os et permet d'assurer une meilleure fixation de l'implant dentaire qui va mordre directement dans l'os environnant.

La géométrie interne comprend, dans une direction descendante, un cône morse (fixation de la pièce prothétique), un cône d'alignement (guidage d'insertion des ancillaires et des pièces prothétiques), un polygone à six pans (permet la pose de l'implant dentaire et assure un anti-rotationnel de la prothèse), une gorge (pour la préhension de l'implant) et un filet (qui recevra la vis de fixation de la pièce prothétique).

### Brève description des figures

La figure 1 est une illustration schématique des sections qui composent la géométrie externe d'un implant dentaire selon un premier mode de réalisation suivant l'invention.
La figure 2 est une illustration schématique des sections qui composent la géométrie externe d'un implant dentaire selon un autre mode de réalisation suivant l'invention.
La figure 3 est une illustration schématique des sections qui composent la géométrie externe d'un implant dentaire selon encore un autre mode de réalisation suivant l'invention.
La figure 4 est une illustration schématique des sections qui composent la géométrie interne d'un implant dentaire suivant l'invention.
La figure 5 est une illustration schématique de la partie supérieure d'un implant dentaire dont la partie cervicale est surmontée d'une bague en céramique suivant l'invention.

### Description de l'invention

L'invention sera maintenant expliquée plus en détail en faisant référence aux figures annexées. Dans les dessins, une même référence est attribuée à un même élément ou à un élément analogue.

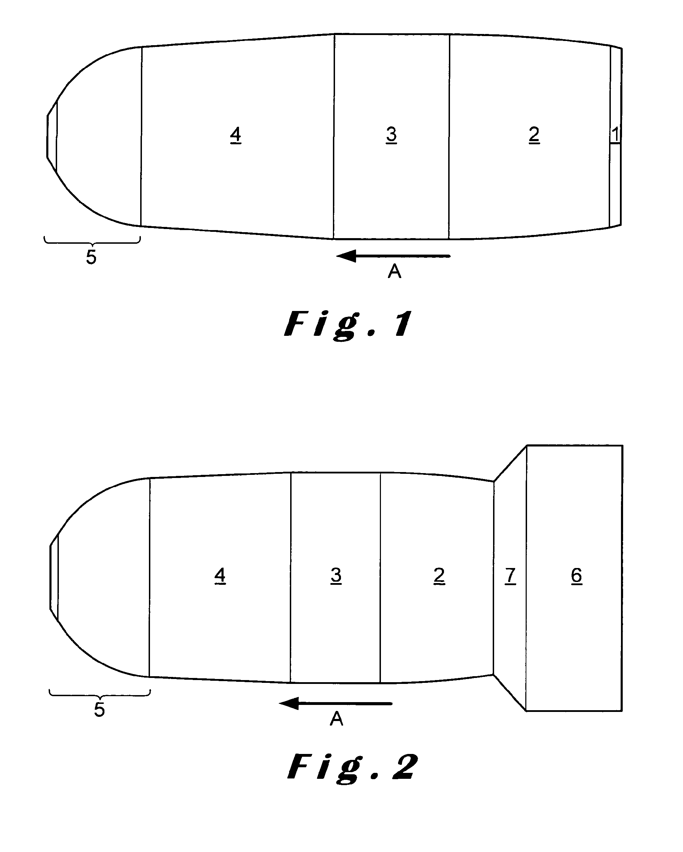

Comme illustré à la figure 1, la géométrie externe de l'implant dentaire comprend une section cervicale de forme ovoïde (2) dont la longueur est comprise entre 1,0 et 4,0 mm et dont le diamètre se réduit vers la tête (située à droite dans la figure) de l'implant dentaire de 2 à 10%. Cette section cervicale (2) peut être surmontée par un col biseauté (1) d'une longueur comprise entre 0,1 et 0,5 mm et dont le biseau permet de rejoindre, de façon atraumatique pour l'os crestal, l'émergence du pilier prothétique.

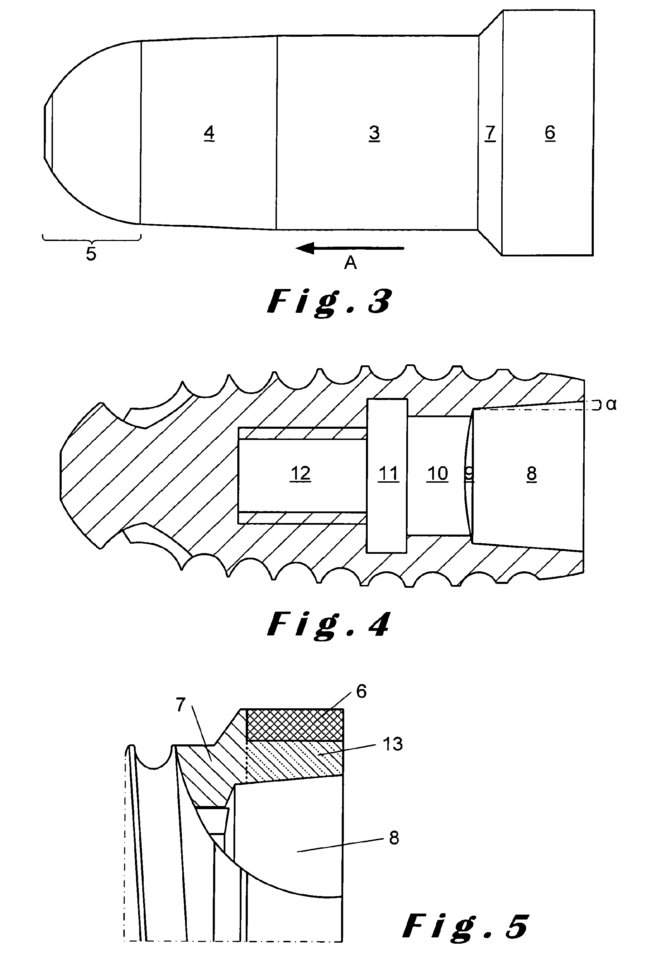

De préférence, la géométrie externe de l'implant dentaire comprend sous la section cervicale de forme ovoïde et dans une direction descendante indiquée par la flèche A par rapport au sens dans lequel l'implant est implanté :
a) une section de forme cylindrique (3) dont la longueur est comprise entre 1,0 et 7,0 mm selon la longueur totale de l'implant. La partie cylindrique (3) permet à l'implant dentaire d'avoir un maximum de contact avec l'os environnant lorsqu'elle est implantée pour ainsi permettre un bon ancrage dans l'os ;
b) une section de forme conique (4) dont la longueur est comprise entre 2,0 et 6,0 mm. Cette section conique (4) assure l'ancrage de l'implant dentaire dans l'os des maxillaires. La conicité de la partie conique (4) de l'implant dentaire présente un profil anatomique similaire à celui d'une dent naturelle et améliore l'ancrage de l'implant dentaire dans l'os des maxillaires. Cet ancrage est renforcé par la présence de filets (repris à la figure 4) sur ladite section conique (4) ;
c) une section en forme de pointe (5) dont la longueur est comprise entre 0,05 et 1,0 mm et qui est conique entre 40 et 70°. Cette section en forme de pointe (5) sert de guide et facilite l'insertion de l'implant dentaire dans le puit de forage (logement osseux).

Selon un autre mode de réalisation illustré à la figure 2, ladite géométrie externe dudit implant dentaire comprend une bague en céramique (6) qui entoure un cylindre en titane (13, repris à la figure 5), ledit cylindre en titane (13) faisant partie du corps de l'implant et étant lié à la section ovoïde (2) de l'implant par une section intermédiaire dite collerette (7). L'ensemble bague en céramique (6) et collerette (7) a une longueur comprise entre 1,0 et 5,0 mm et un diamètre compris entre 3,0 et 7,0 mm.

La bague en céramique (6) assure à la fois une parfaite étanchéité de l'implant avec la gencive permettant d'éviter toute infiltration bactérienne au niveau de l'os crestal, et une meilleure cicatrisation des tissus mous environnants.

De préférence, la géométrie externe dudit implant dentaire comprend dans une direction descendante par rapport au sens (flèche A) dans lequel l'implant est implanté et sous ladite bague en céramique (6) et ladite collerette (7) :
a) une section cervicale de forme ovoïde (2) dont la longueur est comprise entre 1,0 et 4,0 mm et dont le diamètre se réduit vers la tête de l'implant dentaire de 2 à 10% ;
b) une section de forme cylindrique (3) dont la longueur est comprise entre 1,0 et 7,0 mm selon la longueur totale de l'implant. Ladite partie cylindrique (3) permet audit implant dentaire d'avoir un maximum de contact avec l'os environnant lorsqu'elle est implantée ;
c) une section de forme conique (4) dont la longueur est comprise entre 2,0 et 6,0 mm. Cette section conique (4) assure l'ancrage de l'implant dentaire. La conicité de la partie conique (4) de l'implant dentaire présente un profil anatomique similaire à celui d'une dent naturelle et améliore l'ancrage de l'implant dentaire dans l'os des maxillaires. Cet ancrage est renforcé par la présence de filets (repris à la figure 4) sur ladite section conique (4);
d) une section en forme de pointe (5) dont la longueur est comprise entre 0,05 et 1,0 mm et qui est conique entre 40 et 70°. Cette section en forme de pointe (5) sert de guide et facilite l'insertion de l'implant dentaire dans le puit de forage.

La bague en céramique (6) entoure un cylindre en titane (13) qui fait partie du corps de l'implant et qui est lié à la section ovoïde (2) de l'implant par une section intermédiaire dite collerette (7). Ladite bague en céramique (6) est fixée audit cylindre en titane (13) par exemple par frettage, ajustage, collage, soudure, brasure, ou par tout moyen de fixation mécanique ou chimique, afin que la bague en céramique et le corps de l'implant constitue une même pièce (implant monobloc). Le profil externe de la bague en céramique (6) peut être droit ou angulé, en fonction de l'espace prothétiquement utilisable.

Ledit implant comporte également sur sa face extérieure une partie auto-taraudante sur une longueur comprise entre 3,0 et 5,0 mm et qui est formée par une spirale conique. Cette spirale conique est caractérisée par un pas compris entre 10,0 et 25,0 mm sur l'ensemble des sections de la géométrie externe à l'exception de la section cervicale (2) et de la section cylindrique (3). Ladite partie auto-taraudante, cruciforme sur son extrémité, raye de façon hélicoïdale la section en forme de pointe et la section de forme conique de la géométrie externe de l'implant dentaire avec un profil carré dans un plan normal à l'axe, à des valeurs comprises entre 0,1 et 0,4 mm selon les diamètres de l'axe de révolution dans les deux directions du plan. Une fois ledit implant dentaire en place, ladite partie auto-taraudante agit tel un anti-rotationnel, créant une cavité dans l'os dans laquelle l'os peut se reformer et ainsi bloquer toute rotation dudit implant dentaire dans son alvéole (puits de forage) lors des manoeuvres de vissage et de dévissage de l'élément prothétique.

Selon un mode de réalisation alternatif illustré à la figure 3, la géométrie externe de l'implant dentaire comprend, dans une direction descendante, les mêmes éléments que ceux mentionnés dans le mode de réalisation repris à la figure 2 à l'exception de la section cervicale de forme ovoïde.

La présente invention concerne plus particulièrement un implant dentaire ayant une géométrie interne comprenant au moins trois sections et une géométrie externe comprenant au moins trois sections.

Ladite géométrie interne dudit implant dentaire, selon la présente invention et illustrée à la figure 4, comprend, dans une direction descendante par rapport au sens dans lequel l'implant est implanté :
a) un cône morse (8) dont l'angulation est comprise entre 2,0 et 9,0° et dont la longueur est comprise entre 1,0 et 2,5 mm. Ce cône morse (8) assure la fixation et le maintien durable du pilier prothétique (non repris dans le dessin) dans l'implant dans la position désirée. Ledit cône morse (8) offre une grande surface de contact malgré l'angle faible du cône (angle α à la figure 4) afin d'assurer un effet d'emmanchement maximal, tout en permettant un repositionnement avant le vissage du cône morse dans l'implant. Préférentiellement, la connexion avec le pilier prothétique assurée par ledit cône morse (8) sera activée lors de la pose de l'élément prothétique transvissé à l'aide d'une clé dynamométrique calibrée (20 à 30 N.cm) ou d'une pièce à main motorisée indiquant le couple ;
b) un cône d'alignement (9) à 120° qui permet au praticien de placer le pilier prothétique dans la position souhaitée avant tout blocage ;
c) un polygone à six pans (10) dont la longueur est comprise entre 0,8 et 1,2 mm. Ce polygone à six pans (10) permet la pose de l'implant dentaire à l'aide d'un mandrin et l'indexation (choix de la position) du pilier prothétique. De plus il confère un rôle anti-rotationnel à la prothèse ;
d) une gorge (11) dont la longueur est comprise entre 0,5 et 0,8 mm et permettant la préhension de cet implant par un mandrin muni d'une bague qui se logera dans cette gorge ;
e) un filet (12) sur une hauteur comprise entre 1,5 et 3,0 mm et qui permet un transvissage ou un vissage, selon l'élément prothétique utilisé.

Préférentiellement, selon la présente invention, la longueur dudit implant dentaire est comprise entre 6,0 et 17,0 mm tandis que le diamètre dudit implant dentaire est compris entre 2,5 et 7,0 mm.

La présente invention porte également sur un procédé de fabrication d'un implant dentaire au départ d'une pièce longitudinale qui sera façonnée pour que la géométrie externe de l'implant dentaire comporte, dans une direction descendante depuis la tête de l'implant dentaire, un biseau, une section cervicale de forme ovoïde (2), une section de forme cylindrique (3), une section de forme conique (4) et une section en forme de pointe (5).

Ledit procédé de fabrication comporte, suite au façonnage des sections de la géométrie externe, une étape de tourbillonnage pour que la surface de la géométrie externe de l'implant dentaire soit pourvue d'un filet externe conçu en forme de pointe entre 30 et 40°, symétrique selon un axe vertical, à bout rayonné et tangent de rayon compris entre 0,2 et 0,5 mm et avec des pas compris entre 0,75 mm et 2,0 mm. Ledit pas de filet ainsi obtenu est très pénétrant, auto-taraudant et résistant par l'absence d'angles qui sont générateurs de fissures dans l'implant dentaire. Ledit pas de filet ainsi obtenu favorise, lorsqu'il est implanté, l'accumulation d'un volume d'os important entre deux pointes du filet successifs, ce qui a pour effet de diminuer la contrainte moyenne appliquée sur l'os et de répartir la pression exercée sur l'os.

Ledit procédé de fabrication comporte également une étape de traitement de la surface dudit implant dentaire qui est sablée avec du corindon, à l'exception de la partie biseautée ou du cylindre en titane et de la bague en céramique, et passivée à l'acide, par exemple à l'acide fluorhydrique. Ce traitement de surface a pour but d'améliorer l'ostéointégration dudit implant dentaire en offrant une surface rugueuse (macro et micro rugosités) sur laquelle l'os va pouvoir se fixer. La surface de la partie biseautée n'est pas traitée par sablage afin d'éviter toute colonisation bactérienne et ainsi préserver l'os crestal.

## Revendications

1. Implant dentaire ayant une géométrie interne et une géométrie externe, laquelle géométrie externe comprend au moins trois sections dont une forme la section cervicale, ledit implant étant pourvu d'un moyen de fixation agencé pour y fixer un pilier prothétique, **caractérisé en ce que** ladite section cervicale est de forme ovoïde dans le sens longitudinal et ledit moyen de fixation étant réalisé par une fixation de type cône morse.

2. Implant dentaire selon la revendication 1, **caractérisé en ce que** ladite section cervicale de forme ovoïde présente un diamètre se réduisant dans une direction vers la tête dudit implant dentaire.

3. Implant dentaire selon la revendication 1 ou 2, **caractérisé en ce que** ladite section cervicale est surmontée d'une partie biseautée dont la longueur est comprise entre 0,1 et 0,5 mm.

4. Implant dentaire selon l'une des revendications 1 à 3, **caractérisé en ce que** ladite géométrie externe de l'implant dentaire comprend, dans une direction descendante :
a) la section cervicale de forme ovoïde dont la longueur est comprise entre 1,0 et 4,0 mm ;
b) une section de forme cylindrique dont la longueur est comprise entre 1,0 et 7,0 mm ;
c) une section de forme conique dont la longueur est comprise entre 2,0 et 6,0 mm ;
d) une section en forme de pointe dont la longueur est comprise entre 0,05 et 1,0 mm.

5. Implant dentaire selon l'une des revendications 1 à 4, **caractérisé en ce qu'**au dessus de la section cervicale se trouve une bague en céramique reliée au corps de l'implant par frettage, ajustage, collage, soudure, brasure, ou par tout moyen de fixation mécanique ou chimique.

6. Implant dentaire selon la revendication 5, **caractérisé en ce que** ladite bague a une longueur comprise entre 1,0 et 5,0 mm et un diamètre compris entre 3,0 et 7,0 mm.

7. Implant dentaire selon les revendications 4, 5 ou 6, **caractérisé en ce que** la section conique est pourvue d'un filet ayant une conicité en fond de filet comprise entre 4,0 et 8,0 mm.

8. Implant dentaire selon l'une des quelconques revendications 1 à 7, **caractérisé en ce que** ledit implant dentaire comporte une partie auto-taraudante d'une longueur comprise entre 3,0 et 5,0 mm et comprend aussi une spirale conique avec un pas compris entre 10,0 et 25,0 mm sur l'ensemble des sections de la géométrie externe.

9. Implant dentaire ayant une géométrie externe, **caractérisé en ce que** ladite géométrie externe de l'implant dentaire comprend, dans une direction descendante :
a) une bague en céramique ayant une longueur comprise entre 1,0 et 5,0 mm et un diamètre compris entre 3,0 et 7,0 mm ;
b) une section de forme cylindrique dont la longueur est comprise entre 1,0 et 7,0 mm ;
c) une section de forme conique dont la longueur est comprise entre 2,0 et 6,0 mm ;
d) une section en forme de pointe dont la longueur est comprise entre 0,05 et 1,0 mm.

10. Implant dentaire selon l'une des revendications 1 à 9, **caractérisé en ce que** ladite géométrie interne comprend, dans une direction descendante :
a) un cône morse dont l'angulation est comprise entre 2,0 et 9,0°, et dont la longueur est comprise entre 1,0 et 2,5 mm ;
b) un cône d'alignement à 120° ;
c) un polygone à six pans dont la longueur est comprise entre 0,8 et 1,2 mm ;
d) une gorge dont la longueur est comprise entre 0,5 et 0,8 mm ;
e) un filet sur une hauteur comprise entre 1,5 et 3,0 mm.

11. Implant dentaire selon l'une des quelconques revendications 1 à 10, **caractérisé en ce que** la longueur totale dudit implant dentaire est comprise entre 6,0 et 17,0 mm et que le diamètre mesuré à hauteur de la section cervicale dudit implant dentaire est compris entre 2,5 et 7,0 mm.

12. Procédé de fabrication d'un implant dentaire selon l'une des revendications 1 à 11, **caractérisé en ce que** ladite géométrie externe est usinée par tourbillonnage de telle façon qu'elle est pourvue à sa surface d'un pas de vis externe en pointe entre 30 et 40°, symétrique selon un axe vertical, à bout rayonné et tangent, de rayon compris entre 0,2 et 0,5 mm, avec un pas compris entre 0,75 et 2,0 mm.

13. Procédé de fabrication d'un implant dentaire selon la revendication 11, **caractérisé en ce que** ledit implant dentaire est sablé sur l'ensemble de sa géométrie externe à l'exception de la partie biseautée ou du cylindre titane et de la bague en céramique et **en ce que** ledit implant dentaire est passivé à l'acide.
